# EUROPÄISCHE PATENTANMELDUNG

(11) **EP 0 875 417 A1**
(43) Veröffentlichungstag der Anmeldung: **04.11.1998**
(21) Anmeldenummer: 98101710.6
(22) Anmeldetag: 02.02.1998
(51) Int. Cl.: B60N 2/48

(54) **Kopfstütze für Fahrzeugsitze**

(30) Priorität: 29.04.1997 DE 19717942
(71) Anmelder: PETER BUTZ GmbH & Co Verwaltungs-KG, 40764 Langenfeld (DE)
(72) Erfinder: Wege, Lutz, 42657 Solingen (DE); Teichmann, Jörg, 07326 Lobenstein (DE); Pätzold, Mathias, 40764 Langenfeld (DE)
(74) Vertreter: Patentanwälte Ostriga & Sonnet

(57) **Zusammenfassung**

Eine Tragstange (10) einer Kopfstütze für Fahrzeugsitze ist mit ihrem mindestens eine Rastkerbe (14, 15) aufweisenden unteren Endbereich in einer sitzlehnenseitig gehaltenen Hülse (11) aufgenommen, welche einen radial zur Tragstange (10) hin- und her beweglichen, letztere mit seiner Rahmenöffnung (17) umschliessenden rahmenförmigen Rastriegel (16) etwa schubladenartig in Längsrichtung (L) seiner im Parallelabstand angeordneten beiden Führungsschenkel (19) aufnimmt. Zwischen den Führungsschenkeln (19) weist der Rastriegel (16) noch einen Rastschenkel (20) und einen Verbindungsschenkel (21) auf.

Die sich jeweils in einer Ebene erstreckende obere (28) und untere (29) Gegenführungsfläche der Hülse (11) begrenzt jeweils ein Rechteck durchgehend. Der Verbindungsschenkel (21) ergänzt mit seiner oberen Schenkelfläche (36) und mit seiner unteren Schenkelfläche (37) jeweils die obere (26) und die untere (27) Führungsfläche des Rastriegels (16) zu einer Rechteckform, wodurch es möglich ist, den Rastriegel (16) insgesamt als Kunststoff-Spritzgußteil auszubilden.

## Beschreibung

Die Erfindung betrifft eine Kopfstütze für Fahrzeugsitze entsprechend dem Oberbegriff des Anspruchs 1. Eine solche Kopfstütze ist durch die DE 34 37 803 C2 bekanntgeworden.

Die bekannte Kopfstütze weist ein in einer Sitzlehne befestigtes Führungsteil in Gestalt einer Hülse auf, in welcher der untere Endbereich einer Tragstange lösbar verrastet ist. Zu diesem Zweck führt die Hülse einen flachen Metallrahmen, der die Tragstange mit einer Rahmenöffnung umschließt und dessen Rastschenkel mit einem der Rahmenöffnung zugewandten inneren Bereich in eine Rastkerbe der Tragstange eingreift und dort mittels Federrückstellkraft gesichert ist.

Der erwähnte flache Metallrahmen gemäß der DE 34 37 803 C2 besteht aus vier im Geviert zueinander angeordneten Schenkeln, nämlich aus zwei Führungsschenkeln, aus einem die Führungsschenkel einenends verbindenden Rastschenkel und aus einem die beiden Führungsschenkel andernends miteinander verbindenden Verbindungsschenkel.

Der Rastschenkel und die beiden Führungsschenkel bilden jeweils eine etwa U-förmige durchgehende obere ebene Führungsfläche und im Parallelabstand dazu eine untere ebene durchgehende Führungsfläche. Diese beiden Führungsflächen des Rastriegels wirken mit je einer korrespondierenden oberen und unteren durchgehenden Gegenführungsfläche der Hülse zusammen.

Die sitzlehnenseitige Führungsanordnung bzw. Rastvorrichtung der bekannten Kopfstütze wird als verbesserungsbedürftig empfunden, weil, bedingt durch Fahrerschütterungen, Klappergeräusche zwischen dem aus Metall bestehenden rahmenförmigen Rastriegel und der ebenfalls metallenen Tragstange entstehen können. Außerdem stellen sich Verschleißspuren auf der Tragstangenoberfläche für den Fall ein, daß man die bekannte Anordnung nicht nur, wie in der DE 34 37 803 C2 konkret dargestellt, als Rastvorrichtung mit jeweils nur einer Rastkerbe sondern als Verstellvorrichtung ausbildet. Bei einer sitzlehnenseitig höhenverstellbaren Kopfstütze wirkt der Rastriegel mit einer Anzahl axial versetzt zueinander angeordneter Verstellkerben zusammen.

Ausgehend von der in der DE 34 37 803 C2 beschriebenen Kopfstütze, liegt der Erfindung die Aufgabe zugrunde, die bekannte Kopfstütze so weiterzuentwickeln, daß diese unter Beibehaltung einer stabilen funktionssicheren Bauweise beim Zusammenwirken zwischen dem rahmenförmigen Rastriegel und der Tragstange eine klapperund extrem verschleißarme Betriebsweise gestattet.

Entsprechend der Erfindung wird diese Aufgabe dadurch gelöst, daß die sich jeweils in einer Ebene erstreckende obere und untere Gegenführungsfläche der Hülse je ein Rechteck durchgehend begrenzt, daß der Verbindungsschenkel mit einer oberen und mit einer unteren Schenkelfläche jeweils die obere und die untere Führungsfläche des Rastriegels zu einer Rechteckform ergänzt, und daß der Rastriegel insgesamt ein Kunststoff-Spritzgußteil bildet.

Entsprechend der Erfindung bildet der rahmenförmige Rastriegel eine obere und eine untere durchgehende Führungsfläche, die jeweils mit einer oberen und einer unteren korrespondierenden Gegenführungsfläche, die von der Hülse gebildet ist, zusammenwirkt. Auf diese Weise sind sämtliche Rahmenschenkel des erfindungsgemäßen Rastriegels, auch der Verbindungsschenkel, in beiden Axialrichtungen mittels der ebenfalls durchgehend rechteckförmigen Gegenführungsflächen an der Hülse abgestützt und somit gegen schädliche Biegebelastungen geschützt. Erst diese besondere erfindungsgemäße Bauform gestattet es, einen rahmenförmigen Rastriegel zu verwenden, der insgesamt ein Kunststoff-Spritzgußteil bildet. Im Unterschied zur Erfindung wäre, angewandt auf die Anordnung gemäß der DE 34 37 803 C2, dort ein insgesamt aus Kunststoff bestehender Rastriegel nicht zu empfehlen, weil dem bekannten Verbindungsschenkel in beiden Axialrichtungen eine Abstützung an der Hülse fehlt.

Dadurch, daß der erfindungsgemäße Rastriegel ein Kunststoff-Spritzgußteil ist, gewährleistet dieser jedenfalls Klapperfreiheit und außerdem für den Fall einer sitzlehnenseitigen Höhenverstellung der Kopfstütze einen extrem verschleißarmen Betrieb, bei welchem unschöne Verschleißspuren auf der ggf. veredelten, z.B. verchromten, Mantelfläche der Tragstange vermieden sind.

Ein anderer Vorteil der erfindungsgemäßen Kopfstütze besteht darin, daß infolge der stoffeinheitlichen Ausführung des rahmenförmigen Rastriegels die häufig mit Schwierigkeiten verbundene Kunststoffumspritzung von Metallteilen vermieden wird. Bei der Kopfstütze gemäß der DE 34 37 803 C2 hingegen muß der einen Metallrahmen darstellende Rastriegel in eine Spritzgießform eingelegt und an einem Ende mit einer in der Werkzeugform anzuspritzenden Bedienungstaste versehen werden. Für den Fall, daß bei der erfindungsgemäßen Kopfstütze eine Bedienungstaste gewünscht wird, kann diese an den insgesamt aus Kunststoff bestehenden rahmenförmigen Rastriegel stoffschlüssig angeformt werden. Auch ist es erfindungsgemäß möglich, eine als gesondertes, z.B. andersfarbiges Bauteil ausgebildete Bedienungstaste auf ein Ende des rahmenförmigen Kunststoff-Rastriegels aufzuklipsen bzw. aufzurasten.

In weiterer Ausgestaltung der Erfindung besteht der Rastriegel aus einem armierten, wie z.B. faserarmierten, und gegebenenfalls Reibungsbeiwerte vermindernde Füllstoffe enthaltenden Kunststoff.

Für den Fall, daß bei einer sitzlehnenseitig höhenverstellbaren Kopfstütze der Höhenverstellwiderstand zwischen dem aus Kunststoff bestehenden Rastriegel und der aus Metall bestehenden Tragstange zu gering sein sollte, sieht die Erfindung vor, daß die Wand der Hülse mindestens einen die Mantelfläche der Tragstange mit einer Federrückstellkraft beaufschlagenden Bremskörper aufnimmt.

Weitere Erfindungsmerkmale ergeben sich aus zusätzlichen Ansprüchen.

In den Zeichnungen ist ein bevorzugtes Ausführungsbeispiel entsprechend der Erfindung näher dargestellt.

Es zeigt:
Fig. 1 einen teilweisen Axialschnitt durch eine nur mit einer axialen Teillänge dargestellten sitzlehnenseitig befestigten Hülse, die einen nur teilweise dargestellten unteren Endbereich einer Tragstange aufnimmt,
Fig. 2 die Anordnung gemäß Fig. 1, jedoch um 90° umfangswinkelversetzt,
Fig. 3 bei Weglassung einer Abdeckkappe eine radiale Schnittansicht, etwa entsprechend der in Fig. 2 mit III-III bezeichneten Schnittlinie, und
Fig. 4 eine räumliche Darstellung eines axialen Teilbereichs einer Hülse mit einer Hülsenwand, die einen von einer Bügelfeder in Zustellrichtung belasteten Bremskörper enthält, wobei Fig. 4 zur weiteren Verdeutlichung die räumliche Darstellung einer gesondert gezeigten Bügelfeder zugeordnet ist.

Eine Tragstange 10, deren nicht dargestellter oberer Bereich den Kopfkasten einer umpolsterten Kopfstütze trägt, ist mit ihrem nur teilweise gezeigten unteren axialen Endbereich in einer sitzlehnenseitig befestigten Hülse 11 aufgenommen, von welcher nur der obere Teil mit dem Hülsenkopf 12 gezeigt ist. Unten an den Hülsenkopf 12 schließt sich ein Hülsenschaft 13 an.

Die Tragstange 10 besitzt eine Haltekerbe 14 und mehrere Verstellkerben 15, von denen nur eine gezeigt ist.

Im Hülsenkopf 12 ist ein insgesamt aus kohlefaserverstärktem Polyamid bestehender rahmenförmiger Rastriegel 16 geführt, der mit einer Rahmenöffnung 17 die Tragstange 10 umschließt, welche an der kreiszylindrischen Innenmantelfläche 18 des Hülsenschafts 13 radial geführt ist.

Der Rastriegel 16 ist mit zwei im Parallelabstand zueinander angeordneten Führungsschenkeln 19, einem die beiden Führungsschenkel 19 einenends miteinander verbindenden Rastschenkel 20 und mit einem die beiden Führungsschenkel 19 andernends miteinander verbindenden Verbindungsschenkel 21 versehen.

Der Rastriegel 16 ist parallel zu den Längsachsen L seiner beiden Führungsschenkel 19 hin- und her verschieblich. Der Verbindungsschenkel 21 ist beidendig mit je einem Fortsatz 22 versehen, an welchem sich jeweils eine in einer bohrungsartigen Aufnahme des Hülsenkopfes 12 angeordnete Schraubendruckfeder 23 derart abstützt, daß der Rastriegel 16 in Verriegelungsrichtung z rückstellbelastet ist. Dabei greift der der Rahmenöffnung 17 zugewandte innere Bereich 24 des Rastschenkels 20 in die Haltekerbe 14 bzw. in die Verstellkerbe 15 ein.

Der Rastriegel 16 bildet mit seinen Führungsschenkeln 19, mit seinem Rastschenkel 20 und mit seinem Verbindungsschenkel 21 eine jeweils in einer Ebene angeordnete durchgehende, die Rahmenöffnung 17 etwa rechteckartig umschliessende obere Führungsfläche 26 und eine untere Führungsfläche 27.

Jeweils über ihren gesamten Umfang sind sowohl die obere Führungsfläche 26 als auch die untere Führungsfläche 27 an einer ebenfalls rechteckförmig geschlossenen oberen Gegenführungsfläche 28 und an einer unteren Gegenführungsfläche 29 der Hülse 11 abgestützt. Auf diese Weise ist der Rastriegel 16 in beiden axialen Verstell- bzw. Belastungsrichtungen a und b, gegen schädliche Durchbiegung gesichert, über den gesamten Rechteckumfang abgestützt.

Außen weist der Verbindungsschenkel 21 eine Verdickung 30 auf, welche gegen die Innenseite eine auf den Hülsenkopf 12 aufgerasteten Abdeckkappe 31 stößt.

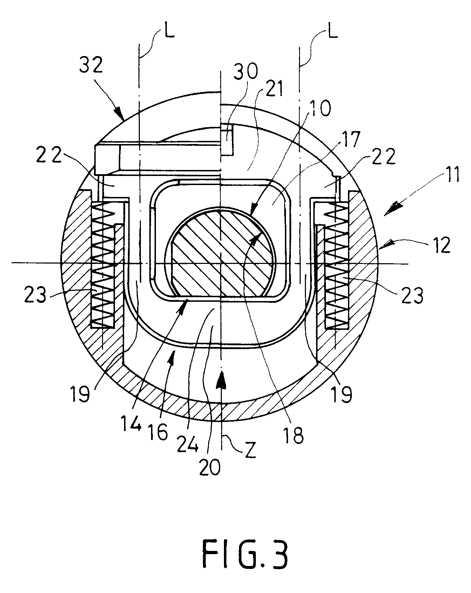

Die Verdickung 30 kann auch als stoffschlüssig angeformtes Bedienteil (Taste) 32 ausgebildet sein, was anhand der linken hälftigen Teildarstellung in Fig. 3 (in Fig. 3 ist die Abdeckkappe 31 weggelassen) verdeutlicht ist.

Die Funktion der dargestellten Anordnung ist folgende:

Wenn die Tragstange 10 in Ausziehrichtung a nach oben aus der Hülse 11 herausgezogen werden soll, ist dieses nur möglich, wenn der Rastriegel 16 in Entriegelungsrichtung x entgegen der Rückstellkraft der Schraubendruckfedern 23 mit seinem Rastschenkel 20 radial aus der Haltekerbe 14 herausbewegt wird.

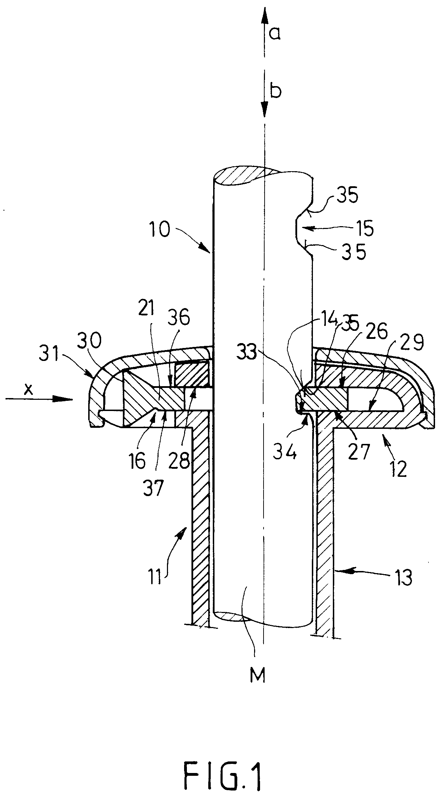

Die in Fig. 1 dargestellte Verriegelungsstellung wird dadurch bewirkt, daß eine sich radial zur Tragstange 10 erstreckende untere Flanke 33 der Haltekerbe 14 an einer sich ebenfalls radial erstreckenden Schulter 34 des Rastschenkels 20 anliegt.

Die obere Flanke der Haltekerbe 14 erstreckt sich hingegen als Gleitflanke 35 geneigt zur Längsachse der Tragstange 10. Deshalb kann die Tragstange 10 mit einem in Richtung b wirkenden gewissen Druck entgegen der Rückstellkraft der Schraubendruckfedern 23 nach unten verschoben werden. Die Verstellkerbe 15 gestattet eine Axialverstellung der Tragstange 10 in beiden Richtungen a und b, da die Verstellkerbe 15 entsprechend ihrem etwa trapezförmigen Querschnitt zwei Gleitflanken 35 aufweist.

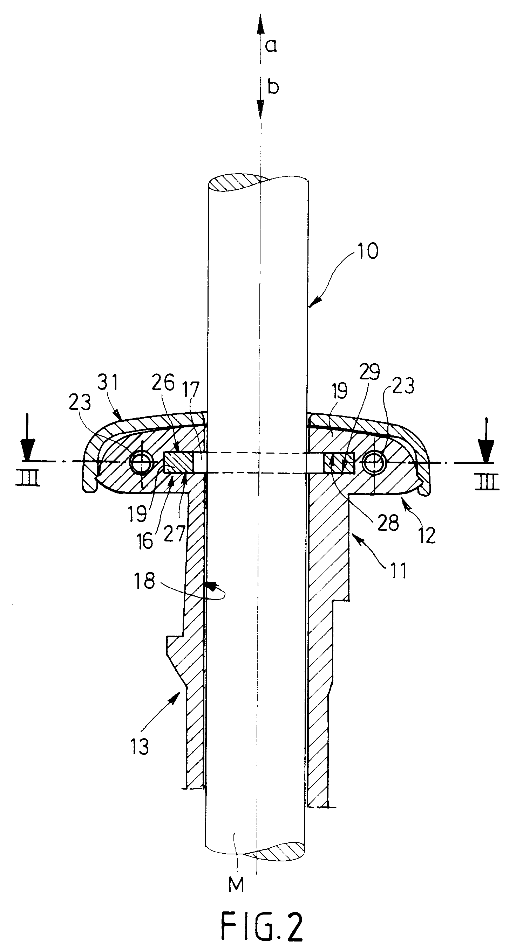

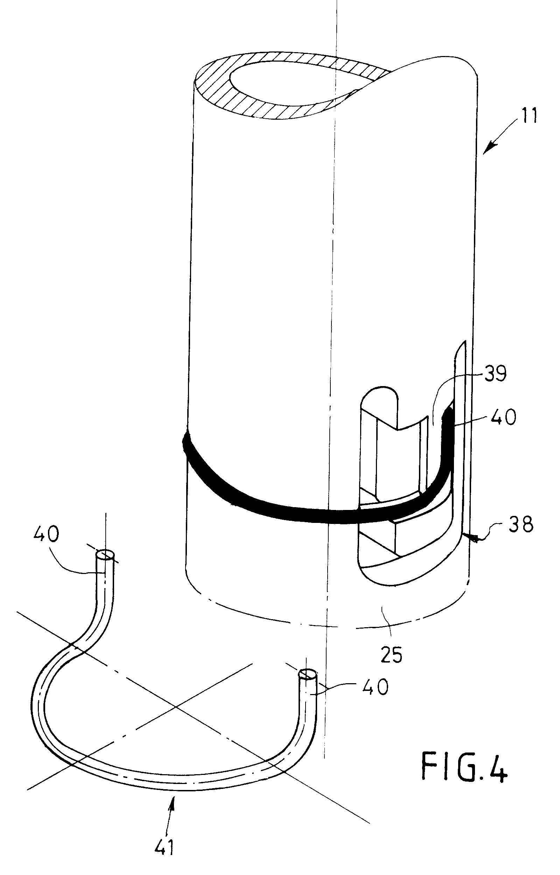

Fig. 4 zeigt einen Axialbereich der Hülse 11, aus deren Wand 25 ein insgesamt mit 38 bezeichnete Bremskörper freigeschnitten ist, welcher nur über eine Zunge 39 in einer stoffschlüssigen Verbindung mit der Wand 25 steht. Auf der nicht sichtbaren diametral gegenüberliegenden Umfangsseite der Hülse 11 ist ein dem Körper 38 identischer zweiter Bremskörper 38 angeordnet. Beide Bremskörper 38 werden von den hochgebogenen beiden Schenkelenden 40 einer Bügelfeder 41 verrastend hintergriffen, so daß die Schenkel 40 beide Bremskörper 38 radial einwärts gegen die aus den Fig. 1 bis 3 ersichtliche Mantelfläche M der Tragstange 10 drücken. Die Bremskörper 38 sind bezüglich der aus Fig. 1 ersichtlichen Kerben 14, 15 um 90° umfangswinkelversetzt.

Die obere Schenkelfläche des Verbindungsschenkels 21 ist mit 36 und dessen untere Schenkelfläche mit 37 bezeichnet.

Die erfindungsgemäße Anordnung gestattet eine Verwendung sowohl bei sitzlehnenseitig als auch bei kopfkastenintern höhenverstellbaren Kopfstützen.

## Patentansprüche

1. Kopfstütze für Fahrzeugsitze mit einem Kopfkasten, welcher am oberen Bereich mindestens einer Tragstange (10) gehalten ist, deren mit mindestens einer Rastkerbe (14, 15) versehener unterer Bereich in einer sitzlehnenseitig gehaltenen Hülse (11) aufgenommen ist, welche einen die Tragstange (10) mit seiner Rahmenöffnung (17) umschließenden, etwa schubladenartig in Längsrichtung (L) seiner im Parallelabstand angeordneten beiden Führungsschenkel (19) und radial zur Tragstange (10) hin- und herbeweglichen (bei x und z) rahmenförmigen Rastriegel (16) aufnimmt, wobei zwischen den beiden Führungsschenkeln (19), voneinander distanziert, ein Verbindungsschenkel (21) und ein Rastschenkel (20) angeordnet sind, wobei letzterer (20) mittels Federrückstellkraft (bei 23) gegen die Tragstange (10) gehalten ist und dabei in die tragstangenseitige Rastkerbe (14, 15) eingreifen kann, und wobei der Rastschenkel (20) und die beiden Führungsschenkel (19) eine durchgehende obere ebene Führungsfläche (26) und dazu im Parallelabstand eine durchgehende untere ebene Führungsfläche (27) bilden, die mit je einer korrespondierenden durchgehenden oberen (28) und unteren (29) Gegenführungsfläche der Hülse (11) zusammenwirken, dadurch gekennzeichnet, daß die sich jeweils in einer Ebene erstreckende obere (28) und untere (29) Gegenführungsfläche der Hülse (11) je ein Rechteck durchgehend begrenzt, daß der Verbindungsschenkel (21) mit einer oberen (36) und mit einer unteren (37) Schenkelfläche jeweils die obere und die untere Führungsfläche des Rastriegels (16) zu einer Rechteckform ergänzt, und daß der Rastriegel (16) insgesamt ein Kunststoff-Spritzgußteil bildet.

2. Kopfstütze nach Anspruch 1, dadurch gekennzeichnet, daß der Rastriegel (16) aus einem armierten, wie z.B. faserarmierten, und gegebenenfalls Reibungsbeiwerte vermindernde Füllstoffe enthaltenden Kunststoff besteht.

3. Kopfstütze nach Anspruch 1 oder nach Anspruch 2, dadurch gekennzeichnet, daß die Wand (25) der Hülse (11) mindestens einen die Mantelfläche (M) der Tragstange (10) mit einer Federrückstellkraft beaufschlagenden Bremskörper (38) aufnimmt.

4. Kopfstütze nach Anspruch 3, dadurch gekennzeichnet, daß der Bremskörper (38) ein aus der Wand (25) der Hülse (11) freigeschnittenes, über eine Zunge (39) mit der Wand (25) der Hülse (11) stoffschlüssig verbundenes Bauteil bildet.

5. Kopfstütze nach Anspruch 3 oder nach Anspruch 4, dadurch gekennzeichnet, daß der Bremskörper (38) bezüglich der auf derselben Mantellinie der Tragstange (10) angeordneten Rastkerben um 90° umfangswinkelversetzt ist.

6. Kopfstütze nach einem der Ansprüche 3 bis 5, dadurch gekennzeichnet, daß auf derselben axialen Höhe der Hülse (11) zwei im Umfangswinkelabstand von 90° zueinander angeordnete Bremskörper (38) angeordnet sind.

7. Kopfstütze nach Anspruch 6, dadurch gekennzeichnet, daß beide Bremskörper von je einem Ende (40) einer etwa halbkreisförmig bügelartig geformten Stahlfeder (41) beaufschlagt und mit dieser formschlüssig verrastet sind.
